(19) Europäisches Patentamt
European Patent Office
Office européen des brevets

(11) Numéro de publication: **0 208 630**
**B1**

(12) **FASCICULE DE BREVET EUROPEEN**

(45) Date de publication du fascicule du brevet: **02.05.90**

(51) Int. Cl.$^5$: **C 08 G 77/62**, C 08 L 83/16

(21) Numéro de dépôt: **86420162.9**

(22) Date de dépôt: **24.06.86**

(54) **Procédé de traitement par catalyse cationique d'un polysilazane comportant en moyenne au moins deux groupes =/- SiH par molécule.**

(30) Priorité: **26.06.85 FR 8510033**

(43) Date de publication de la demande:
**14.01.87 Bulletin 87/03**

(45) Mention de la délivrance du brevet:
**02.05.90 Bulletin 90/18**

(84) Etats contractants désignés:
**AT BE CH DE FR GB IT LI LU NL SE**

(56) Documents cités:
**EP-A-0 146 802**
**DE-B-1 205 698**
**US-A-3 187 030**
**US-A-4 482 689**

**Le dossier contient des informations techniques présentées postérieurement au dépôt de la demande et ne figurant pas dans le présent fascicule.**

(73) Titulaire: **RHONE-POULENC CHIMIE**
**25, quai Paul Doumer**
**F-92408 Courbevoie Cédex (FR)**

(72) Inventeur: **Porte, Hugues**
**65, rue de Sèze**
**F-69006 Lyon (FR)**
Inventeur: **Lebrun, Jean-Jacques**
**24, rue Pierre Brunier**
**F-69300 Caluire-et-Cuire (FR)**

(74) Mandataire: **Seugnet, Jean Louis et al**
**RHONE-POULENC CHIMIE Service Brevets Chimie Centre de Recherches des Carrières B.P. 62**
**F-69192 Saint-Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 208 630 B1

**Description**

La présente invention concerne un procédé de traitement par catalyse cationique d'un polysilazane comportant en moyenne au moins deux groupes ≡ SiH par molécule.

Les organopolysilazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

Ces polysilazanes peuvent être notamment mis en forme et être pyrolysés sous forme de $Si_3N_4$, SiC ou leurs mélange. Pour fabriquer du nitrure de silicium, il existe une autre voie qui consiste à faire réagir à haute température et un phase vapeur des chlorosilanes ($SiCl_4$, $HSiCl_3$ et $H_2SiCl_2$) sur l'ammoniac. Selon cette méthode aboutissant directement à un produit en poudre, il est difficile de fabriquer des objets en forme, en particulier, de fibres. Par contre, les polysilazanes peuvent être filés en fibres continues dont la pyrolyse aboutit à des fibres céramiques.

Ils peuvent être mis sous forme de pellicules plus ou moins minces, de pièces massives moulées, et être utilisés comme liant pour fibre céramique ou fibre de carbone et comme liant de frittage pour pièces céramiques poreuses.

Il existe toutefois des difficultés pour mettre en forme de facon aisée et économique ces polysilazanes sous forme de fibres ou de revétements qui, après pyrolyse, donnent des produits céramiques sous forme de fibres, de pellicules, de revétements plus ou moins minces et de pièces moulées.

Dans le brevet américain US—A 3 853 567 on a essayé de donner une première solution au probléme ci-dessus.

Selon ce brevet on propose un procédé de fabrication de pièces en forme telles que des fibres comportant du carbure de silicium, du nitrure de silicium ou leurs mélanges avec d'autres produits céramiques, en effectuant un premier traitement thermique à une température comprise entre 200 et 800°C d'un polysilazane, en vue d'obtenir une résine carbosilazane fusible qui peut être filée à l'état fondu puis pyrolysée à une température comprise entre 800 et 2000°C.

Le brevet ci-dessus constitue certes un progrès important mais il présente le double inconvénient de nécessiter un premier traitement thermique à une température pouvant être déjà très élevée (200—800°C) et de travailler un carbosilazane à l'état fondu sous des conditions anhydres et en atmosphère inerte. De plus, le rendement pondéral en céramique peut être insuffisant.

Dans la demande de brevet japonais publiée sous le n° JP—A—54-093100, on décrit un procédé de polymérisation d'organopolysilazanes de hauts poids moléculaire en utilisant comme catalyseur de traitement des organopolysilazanes, des terres acides.

Cette demande exclue la possibilité d'utiliser des polysilazanes présentant des groupes ≡SiH mais n'exclue pas la possibilité d'utiliser des polysilazanes présentant des groupes hydrocarbonés aliphatiques insaturés liés aux atomes de silicium, comme des groupes alcényles par exemple vinyle ou allyle.

Par ailleurs, ce procédé présente l'inconvénient de toujours nécessiter la séparation du catalyseur solide par filtration, impliquant l'emploi de solvants dans le cas de polymères atteignant des viscosités élevées.

Le brevet US—A 3 007 886 décrit un procédé de traitement de polysilazanes par des sels métalliques d'acides monocarboxyliques solubles dans les solvants hydrocarbonés et le brevet US—A 3 187 030 decrit un procédé de traitement de polysilazanes par des sels métalliques particuliers d'acides inorganiques forts, la catalyse étant donc assurée par les cations métalliques jouant le rôle d'acide de Lewis.

La présente invention a pour but de proposer un moyen simple, efficace, économique et de mise en oeuvre aisée pour préparer sous des formes les plus diverses (fils, articles moulés, revêtements, pellicules, etc. . . . .) des polysilazanes qui, lors de leur pyrolyse, à une température comprise entre 1000 et 2000°C donnent des produits céramiques présentant d'excellentes propriétés.

Il est en outre souhaitable et c'est un autre but de la présente invention de pouvoir disposer facilement d'un polysilazane qui soit assez stable à l'hydrolyse et qui conduise par pyrolyse avec un rendement pondéral élevé, à un matériau céramique. Il est nécessaire pour cela que le polysilazane présente lors de la pyrolyse une bonne tenue thermique tout en demeurant solidaire du support à revêtir et à imprégner.

Ces buts et d'autres sont atteints par la présente invention qui concerne en effet un procédé de traitement d'un polysilazane, caractérisé en ce qu'on traite catalytiquement au moins un polysilazane présentant en moyenne au moins 2, de préférence au moins 3 groupes ≡ SiH par molécule, les autres radicaux organiques liés aux atomes de silicium ou d'azote étant des radicaux hydrocarbonés exempts d'insaturations alcéniques ou alcyniques par une quantité catalytiquement efficace d'un catalyseur acide organique ou minéral fort.

Le polysilazane de départ utilisé pour la mise en oeuvre du procédé de l'invention présente donc par molécule au moins 2, de préférence au moins 3 motifs choisis parmi les motifs de formule (Ia), (Ib) et (Ic):

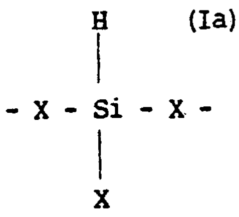 (Ia) 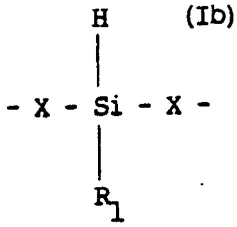 (Ib) 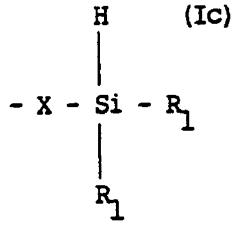 (Ic)

dans lesquelles les radicaux $R_1$ identiques ou différents, sont choisis parmi un atome d'hydrogène, un radical hydrocarboné aliphatique saturé et un radical aryle, alkylaryle ou arylalkyle;

Dans le polysilazane de départ, les motifs autres que (Ia), (Ib), (Ic) peuvent être des motifs choisis parmi les motifs de formule:

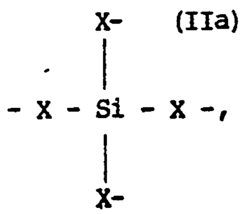 (IIa), 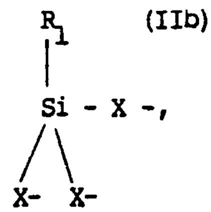 (IIb), 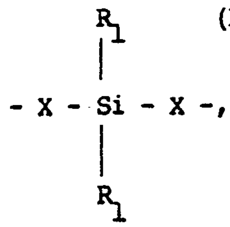 (IIc), 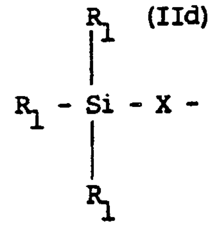 (IId)

dans lesquelles les radicaux $R_1$ ont la signification ci-dessus et les chaînons X identiques ou différents représentent les chaînons $(CH_2)_n$ (avec n étant un nombre entier compris entre 1 et 8), —Si— et N—, au moins 50% des X étant N—.

Dans les formules (Ib) et (Ic), (IIb), (IIc) et (IId), le radical $R_1$ peut être un radical hydrocarboné aliphatique saturé, de préférence ayant de 1 à 8 atomes de carbone, comme un radical méthyle, éthyle, propyle, butyle, pentyle, hexyle, heptyle et octyle; le radical $R_1$ peut être également un radical hydrocarboné cyclique saturé ayant de 3 à 7 atomes de carbone comme le radical cyclopropyle, cyclobutyle, cyclopentyle, cyclohexyle et cycloheptyle; $R_1$ peut être un radical arylalkyle comme les radicaux benzyle et phényléthyle, ou un radical alkylaryle comme les radicaux tolyle et xylyle. Les radicaux méthyle et phényle sont les radicaux préférés.

De préférence X est choisi parmi N— et —S—.

Les polysilazanes ci-dessus sont des produits bien connus décrits en détail dans la littérature.

Ils peuvent être obtenus comme produit de réaction d'au moins un organohalogénomonosilane de formule:

$$R_aY_{4-a}Si$$

dans laquelle Y est un halogène qui est généralement l'atome de chlore et le ou les radicaux R identiques ou différents peuvent avoir la définition de $R_1$ ci-dessus ou représenter l'atome d'hydrogène a est un nombre entier compris entre 0 et 3 inclus, sur un composé organique ou organosilylé comportant au moins un groupement $NH_2$ ou NH comme par exemple l'ammoniac, les amins primaires ou secondaires, les silylamines, les amides, les hydrazines, les hydrazides, etc. . . . .

Comme organohalogénosilane utilisable seul ou en mélange on peut citer:

$(CH_3)_2SiCl_2$, $(CH_3)_3SiCl$, $CH_3SiCl_3$, $SiCl_4$
$(C_6H_5)_2SiCl_2$, $(C_6H_5)(CH_3)Si\ Cl_2$, $C_6H_5SiCl_3$
$(CH_3)(CH_3CH_2)SiCl_2$
$CH_3HSiCl_2$, $H_2SiCl_2$, $(CH_3)_2HSiCl$, $HSiCl_3$

Comme exemples de composés comportant au moins un groupement $NH_2$ ou NH et utilisables pour la synthèse des polysilazanes ci-dessus, on peut citer: l'ammoniac, la méthylamine, la diméthylamine, l'éthylamine, la cyclopropylamine, l'hydrazine, la méthylhydrazine, l'éthylènediamine, la tétraméthylènediamine, l'hexaméthylèdiamine, l'aniline, la méthylaniline, la diphénylamine, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthyldisilazane.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Plus particulièrement les polysilazanes de départ présentant des motifs de formule (Ib) peuvent être formés par coammonolyse des silanes suivants: $CH_3SiCl_3$, $(CH_3)_2SiCl_2$ et $CH_3HSiCl_2$.

Comme polysilazane présentant des motifs de formule (Ib) et dans laquelle $R_1$ = H on peut utiliser les polysilazanes cycliques ou linéaires de formule:

$$—(H_2SiNH)_n—$$

dont la préparation est décrite en détail dans le brevet américain US—A 4 397 828.

Comme polysilazane cyclique ou linéaire présentant des motifs de formule (Ib) dans laquelle $R_1$ est différent d'un atome d'hydrogène, on peut utiliser les polysilazanes de formule:

$$—(R_1SiHNH)_n—$$

dont la préparation par ammonolyse de $R_1SiHCl_2$ est décrite en détail par S. D. BROWER et C. P. HABER, J. Am. Chem. Soc. 1948, *70*, 3888—91, K.A. ANDRIANOV et al., *Dokl. Akad. Nauk SSSR* 1967, *176*, 85 dans le brevet britannique GB—A 881 178 en dans le brevet US—A 4 482 669.

Dans les formules ci-dessus n est un nombre supérieur ou égal à et est généralement compris entre 3 et 100.

Les polysilazanes peuvent être des polymères résineux formés de motifs choisis parmi ceux de formule $R_3$ $SiNH_{0,5}$, $R_2$ SiNH, $RSiNH_{1,5}$, $Si(NH)_2$ R ayant la signification donnée ci-dessus pour $R_1$ qui sont avantageusement préparés par mise en contact des organochlorosilanes correspondants ou des mélanges de ces silanes avec de l'ammoniac, éventuellement en milieu solvant organique (voir brevets français FR—A 1 379 243, 1 392 853 et 1 393 728).

Ces polysilazanes résineux renferment en quantité prépondérante des liaisons Si—NH—Si et en quantité moindre des liaisons $SiNH_2$ ou $N(Si\equiv)_3$ et comportent parfois en dehors des polymères réticulés, des polymères linéaires ou cycliques; cec derniers ne pouvant se former que si, parmi les organochlorosilanes de départ se trouvent également des diorganodichlorosilanes.

Dans les aminolysats on transpose la notion de fonctionnalité en définissant une fonctionnalité $f^N = 1$ apportée par une liaison Si—N.

Ainsi, dans les aminolysats, du type polysilazane, on distingue les motifs:

$M^N$ : 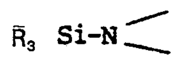 $f^N = 1$

considéré comme monofonctionnel

$D^N$ : 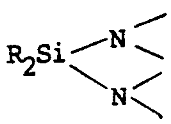 $f^N = 2$

considéré comme difonctionnel

$T^N$ : 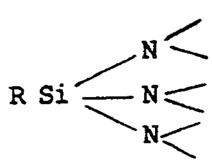 $f^N = 3$

considéré comme trifonctionnel

et $Q^N$ : 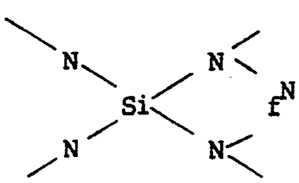 $f^N = 4$

considéré comme tétrafonctionnel.

Les aminolysats de départ sont généralement sous forme de liquide de viscosité faible ou élevée, ou même à l'état pâteux, allant jusqu'à l'état solide.

Or, ces aminolysats comportent généralement un teneur qui peut être importante en espàces de faible masse moléculaire susceptibles d'être éliminées lors de la pyrolyse et par conséquent de diminuer d'autant le rendement pondéral en produit céramique ramené au produit de départ.

En plus, ces aminolysats, en particulier dans le cas où ils comportent une teneur élevée en silicium difonctionnel (par example $D^N$) ne sont pas suffisamment stables thermiquement lors de la pyrolyse; ils se dégradent par rupture des liaisons:

$$\equiv Si—NH \text{ ou } \equiv Si—N$$

pour donner naissance à des oligomères volatils diminuant d'autant le rendement pondéral en produit céramique ramené au produit de départ.

De façon tout à fait inattendue, le procédé de l'invention comportant un traitement en catalyse acide permet d'une part d'incorporer les volatils dans les macromolécules de l'aminolysat et d'autre part en présence de motifs trifonctionnels siliciés (par example $T^N$) de réarranger et de surréticuler le réseau de l'aminolysat qui de ce fait est thermiquement plus stable lors de la pyrolyse. Le traitement catalytique de l'invention provoque donc, suivant la nature de l'aminolysat de départ, une polymérisation et/ou une copolymérisation et/ou un réarrangement des molécules.

Un autre avantage très important découlant du traitement acide selon l'invention est l'obtention d'un aminolysat traité ayant une résistance améliorée à l'oxygène et à l'humiditié de l'air.

Le catalyseur est généralement utilisé à des concentrations comprises entre 1 et 10000 ppm d'acide ramené au polysilazane de départ et de préférence entre 10 et 5000 ppm.

La température de polymérisation est comprise entre 20 et 180°C, de préférence entre 120 et 160°C.

La réaction peut être conduite en masse, ce qui représente un net avantage. On peut toutefois utiliser un solvant organique tel que le toluène, le chlorure de méthylène, le benzène, le xylène, l'hexane, l'heptane, etc...... La réaction peut être conduite à pression atmosphérique, sous pression ou sous pression réduite. La durée de la réaction est bien entendu fonction de la concentration en catalyseur et de la température de la réaction. Pour une température comprise entre 120 et 160°C et une concentration en acide comprise entre 10 et 5000 ppm, la durée de la polymérisation est avantageusement comprise enter 30 minutes et 30 heures.

Par acide minéral ou organique fort on entend selon l'invention n'importe quel acide présentant pour son atome d'hydrogène le plus acide un pKa dans l'eau qui soit inférieur à 5. Les acides plus particulièrement utilisables sont les acides trifluorométhanesulfonique, perchlorique, trichloromethanesulfonique, chlorhydrique, acétique, nitrique, picrique, pyrophosphorique, chromique, p-toluènesulfonique, chloroplatinique.

Le terme acide minéral ou organique fort inclue également les résines échangeuses d'ions possèdant des anions d'acide fort adsorbés ou fixés sur les résines. Des exemples de ces résines sont les résines échangeuses d'ions sulfonés, décrites par exemple dans les brevets US—A 3 037 052 et 3 322 722.

On peut également utiliser des terres acides du type Tonsil® ou Actisil®, ou de la montmorillonite lavée à l'acide sulfurique. On peut également utiliser un catalyseur du type Sphérosil® constitué par un support minéral poreux recouvert d'un film polymérique porteur de groupement sulfonique ou phosphonique comme par exemple décrit dans le brevet français FR—A 2 505 850.

Dans l'application revêtement, pellicules, couches minces, la composition organopolysilazane traitée selon l'invention est de préférence utilisée sans solvant. Dans ce cas, on choisit une viscosité à 25°C comprise entre 10 et 5000 mPa.s, de préférence entre 100 et 1000 mPa.s.

Des viscosités supérieures peuvent être utilisées, mais il est alors nécessaire quand ou veut utiliser les compositions pour enduire ou imprégner un support, de solubiliser la composition dans un solvant organique compatible avec les polysilazanes comme le benzène, le toluène, l'hexane, le cyclohexane, l'éther isopropylique, l'éther éthylique, le dichlorométhane et le chlorobenzène.

Dans l'application fibres on doit utiliser des viscosités supérieures à 5000 mPa.s. On peut opérer sans solvant à l'état fondu ou en soluton, la réticulation s'effectuant à la sortie de la filière par passage dans un four et/ou sous rayonnement (UV, faisceux d'électron).

Les compositions polysilazanes selon l'invention peuvent contenir en outre des charges de préférence choisies parmi $SiO_2$, $Si_3N_4$, SiC, BN, $B_2O_3$, $B_4C$, AlN, $Al_2O_3$, $Al_4C_3$, TiN, $TiO_2$ TiC, $ZrO_2$, ZrC, $VO_2$ etc.....

La composition polysilazane selon l'invention peut en outre servir de matrice pour des fibres céramiques réalisées notamment en SiC, $SiO_2$, $Si_3N_4$, $B_4C$ etc.....

La composition polysilazane selon l'invention est particulièrement utile pour revêtir ou imprégner des supports rigides ou souples en métal ou en fibres céramiques.

Les supports recouverts ou imprégnés de la composition durcie, ou les fibres, peuvent subir immédiatement ou ultérieurement un traitement de pyrolyse de préférence sous vide ou sous pression ou sous atmosphère inerte avec une montée en température allant de la température de réticulation à 1500—2000°C, suivant la nature de la céramique ou du liant désirée.

La composition suivant l'invention permet donc de faire des demi-produits intermédiaires pouvant être conservés à l'air ambiant et qui peuvent être ultérieurement pyrolysés.

Ceci constitue donc un procédé particulièrement avantageux pour déposer ou imprégner sur un support une matière céramique, et pour obtenir des fibres de céramique et des liants de frittage.

Dans les exemples suivants, illustrant l'invention sans en limiter la portée, on analyse les polysilazanes obtenus, traités catalytiquement ou non, par thermogramométrie dynamique (TGA) en les pyrolysant de la température ambiante (20°C) à 1400°C sous azote avec une vitesse de montée en température de 2°C/minute. On indique dans les exemples le rendement TGA (% en poids de résidu solide à 1300—1500°C).

La viscosité est mesurée à 25°C et est donnée en mPa.s. De plus dans les formules Me = $CH_3$, les réactions d'ammonolyse et de coammonolyse sont effectuées dans un premier réacteur I de 3 litres de forme cylindrique (muni d'une double enveloppe pour refroidir le volume réactionnel). Le réacteur est surmonté d'un condenseur de gaz. L'agitation mécanique est assurée par deux turbines RUSHTON® (une turbine à pales droites, une turbine à pales inclinées) disposées le long de l'arbre d'agitation. L'introduction

de gas $N_2$ et $NH_3$ se fait par l'intermédiaire d'un tube fin plongeant dans la solution de façon à faire apparaître $NH_3$ juste sous la première turbine d'agitation. En fin d'ammonolyse le mélange réactionnel est soutiré et est introduit dans un deuxième réacteur II muni d'une agitation mécanique (turbine RUSHTON® à pales droites) et d'un lit filtrant (porosité moyenne 10 µm). Les ammonolysats sont filtrés et les solvants de rinçage sont introduits dans un troisième réacteur III de 6 litres muni d'une double enveloppe et d'une agitation mécanique, d'une turbine de RUSHTON® à pales droites. Ce réacteur où l'on effectue le traitement catalytique est inerté sous $N_2$ ou mis sous vide (25 mbar).

L'ensemble de l'installation est mis sous atmosphère inerte plusieurs heures avant la manipulation. L'ensemble de la réaction, ammonolyse, filtration, évaporation du solvant se fait sous azote sec. Les produits obtenus sont placés dans des flacons étanches inertés à l'azote et conservés, pesés, manipulés sous boîte à gants inertée à l'azote.

Le dosage chimique des fonctions SiH est effectué par action de la potasse butanolique à 5% en poids. Il se dégage une quantité d'hydrogène mesurée par gazomérie proportionnelle à la quantité de SiH présente dans l'échantillon. Par comparaison un échantillon de $D_3N$ (héxaméthylcyclotrisilazane) ne comportant pas de motif SiH, ne produit pas de dégagement d'hydrogène dans l'intervalle de temps et de température nécessaires à la mesure (20°C pendant 15 minutes). Ceci prouve que la potasse ne réagit pas avec les hydrogènes liés à l'azote. Les résultats de la méthode chimique simple d'emploi sont en accord avec les résultats des méthodes spectrales semi-quantitatives (RMN $^1H$, RMN$^{29}Si$ et I.R.).

Par ailleurs dans les exemples suivants on appelle:

$D^N$ = 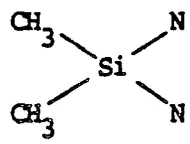

$D'^N$ = 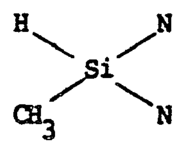

Dans ce qui suit, sauf mentions contraires, les pourcentages indiqués sont en poids.

Exemple 1

207,5 g de $CH_3HSiCl_2$ (1,8 mole) de pureté 99% sont placés dans le réacteur I en présence de 1,2 litre d'éther isopropylique. On introduit l'ammoniac dans le réacteur I avec und débit de 6 cm³/s additionné de $N_2$ avec un débit de 3 cm³/s pendant 7 heures 30 minutes (soit environ 7 moles de $NH_3$ introduites). La température du réacteur I est maintenue à 2°C pendant l'introduction de $NH_3$ (6 heures) et est portée à 20°C toujours avec introduction de $NH_3$ pendant 1 heure 30 minutes. Le chlorure d'ammonium éliminé est séché sous vide et pesé (188 g pour un poids théorique de 192,6 g).

Après élimination du solvant sous vide (25 mbar à 60°C puis 1,5 mbar à 60°C pendant 1 heure), on récupère 84 g d'un liquide limpide peu visqueux. Le rendement pondéral de la réaction est de 79%.

Les solvants récupérés sont analysés par chromatographie en phase gazeuse pour identifier et quantifier le taux de volatils éliminés lors de la dévolatilisation de produit.

Le produit lui-même est analysé par IR, RMN du $^{29}Si$ et RMN du proton $^1H$ (RMN 360 MHz dans $C_6D_6$): $\delta$ = 0,1—0,4 ppm (large: $SiCH_3$) $\delta$ = 0,6 à 1,5 ppm (large: NH) $\delta$ = 4,1 ppm (large: SiH) $\delta$ = 4,5—4,7 ppm (large: SIH) $\delta$ = 4,8—5,0 ppm (large: SiH).

L'analyse par chromatographie liquide indique la présence de plusieurs produits de faibles masses molaires évaluées entre 300 et 450 g. Le dosage chimique du produit indique une teneur en hydrogène du produit = 1,66% (1,70% théorique). Ce résultat est en accord avec les conditions données par les méthodes spectales.

Exemple 2

On effectue la coammonolyse suivant le procédé de l'exemple 1 de:

107,2 g de $CH_3SiCl_3$ (0,72 mole)

46,25 g de $(CH_3)_2SiCl_2$ (0,36 mole)

41,4 g de $CH_3HSiCl_2$ (0,36 mole)

en milieu solvant éther isopropylique (1,3 litre). La réaction s'effectue à 2°C avec un débit de $NH_3$ de 6 cm³/s pendant 7 heures (soit 6,6 moles de $NH_3$ engagées).

On récupère 81,3 g d'un liquide de viscosité 1100 mPa.s. Le rendement pondéral de la coammonolyse est de 86,2%.

Dosage chimique des SiH: 0,37% (0,38% théorique).

Exemple 3

Le polysilazane utilisé est un mélange d'hexaméthylcyclotrisilazane ($D_3^N$) principal produit formé lors de l'ammonolyse du $Me_2 SiCl_2$ et de polysilazane hydrogéné préparé selon l'exemple 1.

La composition molaire de SiH/SiMe est environ de 1/3.

Le mélange est polymérisé pendant 24 heures à 110°C en présence de 3000 ppm d'acide trifluorométhanesulfonique. Le rendement en polymère RR* mesuré par microdévolatilisation est de 80%. Le polymère ainsi séparé est analysé par TGA et donne un rendement en produit minéral de 81%.

RR* en polymère: le rendement en polymère est mesuré de la manière suivante: on introduit environ exactement 2 g de produit dans un bécher (manipulation sous $N_2$ sec) que l'on porte à 175°C durant 2 heures sous un vide de 1,3 moar. Après refroidissement, le bécher est pesé ci qui permet de mesurer le rendement en polymère.

Exemples 4 A 11

On répète le mode opératoire de l'exemple 3 mais en utilisant le polysilazane préparé selon l'exemple 1 comme monomère. Les résultats obtenus pour différentes conditions catalytiques (nature du catalyseur, concentration en catalyseur, température, durée) sont portés dans le Tableau I ci-après:

TABLEAU I

| Exemple | Catalyseur | Teneur en catalyseur ppm | T °C | Durée heures | RR % | TGA % |
|---|---|---|---|---|---|---|
| 4 | $CF_3SO_3H$ | 4 500 | 155 | 3 h 00 | 98 | 80 |
| 5 | $CF_3SO_3H$ | 4 500 | 20 | 6 h 00 | 86 | >95 |
| 6 | $CF_3COOH$ | 3 400 | 155 | 3 h 00 | 99 | 72 |
| 7 | $CF_3COOH$ | 340 | 140 | 5 h 00 | 73 | 68 |
| 8 | $HClO_4$ | 3 400 | 155 | 3 h 00 | 99 | 70 |
| 9 | $CCl_3COOH$ | 4 900 | 155 | 3 h 00 | 94 | 69 |
| 10 | $H_2SO_4$ | 2 900 | 155 | 2 h 45 | 94 | 90 |
| 11 | $CH_3COOH$ | 3 000 | 140 | 5 h 00 | 74 | 70 |

Exemple 12

On répète le mode opératoire des exemples 4 à 11 sauf que l'on remplace le catalyseur homogène par une argile chlorohydrique (Tonsil®) d'acidité 0,6 meq $H^+ g^{-1}$. Les résultats sont rassemblés dans le tableau II ci-après:

TABLEAU II

| Exemple | Catalyseur | Teneur en catalyseur $g. kg^{-1}$ | T °C | Durée heures | RR % | TGA % |
|---|---|---|---|---|---|---|
| 12 | Tonsil® | 20 | 155 | 2 n 00 | 84 | 95 |

Exemple 13 et Exemple Comparatif 13C

Dans cet exemple 13, on opère un réarrangement acide du coammonolysat de $MeSiCl_3$, $Me_2SiCl_2$ et $MeHSiCl_2$ préparé selon l'exemple 2. Les conditions de l'essai ainsi que les résultats sont portés dans le tableau III ci-après:

TABLEAU III

| Exemple | Catalyseur | Teneur en catalyseur ppm | T °C | Durée heures | RR % | TGA % |
|---|---|---|---|---|---|---|
| 2 | — | — | — | — | 74 | 29 |
| 13 C | — | — | 170 | 24 h 00 | 82 | 49 |
| 13 | $CF_3SO_3H$ | 3 675 | 120 | 5 h 00 | 99 | 90 |

Exemples Comparatifs 14C et 15C

On utilise comme polysilazane le principal produit $D_3^N$ formé lors de l'ammonolyse de $Me_2SiCl_2$. On effectue le même traitement catalytique que celui décrit à l'exemple 3 et les résultats sont rassemblés dans le tableau IV ci-après:

TABLEAU IV

| Exemple | Catalyseur | Teneur en catalyseur ppm | T °C | Durée heures | RR % | TGA % |
|---|---|---|---|---|---|---|
| 14 C | $CF_3SO_3H$ | 300 | 165 | 18 h 00 | 57 | 7 |
| 15 C | $CF_3SO_3H$ | 4 500 | 170 | 24 h 00 | 99 | 8 |

**Revendications**

1. Procédé de traitement catalytique d'un polysilazane, caractérisé en ce qu'on traite catalytiquement au moins un polysilazane présentant en moyenne au moins 2, de préférence au moins 3 groupes ≡SiH par molécule, les autres radicaux organiques liés aux atomes de silicium ou d'azote étant des radicaux hydrocarbonés exempts d'insaturation alcèniques ou alcyniques, par une quantité catalytiquement efficace d'un catalyseur acide organique ou minéral fort.

2. Procédé selon la revendication 1, caractérisé en ce que la réaction s'effectue en masse.

3. Procédé selon la revendication 1, caractérisé en ce que la réaction s'effectue en solution dans un solvant organique.

4. Procédé selon l'une quelconque des revendications précédentes, caractérisé en ce que l'acide est utilisé à des teneurs comprises entre 1 et 10000 ppm par rapport au poids de seul polysilazane de départ.

5. Procédé selon l'une quelconque des revendications précédentes, caractérisé en ce que la température de polymérisation est comprise entre la température ambiante et 180°C.

6. Procédé selon l'une quelconque des revendications précédentes, caractérisé en ce que la durée de la réaction de polymérisation est comprise entre 30 minutes et 30 heures.

7. Procédé selon l'une quelconque des revendications précédentes, caractérisé en ce que le traitement est effectué sous pression normale, sous pression ou sous vide.

8. Polysilazane susceptible d'être obtenu par la mise en oeuvre d'un procédé tel que défini à l'une quelconque des revendications 1 à 7.

**Patentansprüche**

1. Verfahren zur katalytischen Behandlung eines Polysilazans, dadurch gekennzeichnet, daß man wenigstens ein Polysilazan, das durchschnittlich wenigstens 2, vorzugsweise wenigstens 3 ≡ SiH-Gruppen pro Molekül enthält, wobei die übrigen an die Siliziumatome oder Stickstoffatome gebundenen organischen Reste Kohlenwasserstoffreste sind, die frei von alkenischen oder alkinischen ungesättigten Bindungen sind, mit einer katalytisch wirksamen Menge eines stark sauren organischen oder mineralischen Katalysators katalytisch behandelt.

2. Verfahren nach Anspruch 1, dadurch gekennzeichnet, daß die Reaktion in der Masse erfolgt.

3. Verfahren nach Anspruch 1, dadurch gekennzeichnet, daß die Reaktion in Lösung in einem organischen Lösungsmittel erfolgt.

4. Verfahren nach einem der vorhergehenden Ansprüche, dadurch gekennzeichnet, daß die Säure in einer Menge von 1 bis 10000 ppm, bezogen auf das Gewicht des alleinigen Ausgangs-Polysilazans, eingesetzt wird.

5. Verfahren nach einem der vorhergehenden Ansprüche, dadurch gekennzeichnet, daß die Polymerisationstemperatur zwischen der Umgebungstemperatur und 180°C liegt.

6. Verfahren nach einem der vorhergehenden Ansprüche, dadurch gekennzeichnet, daß die Dauer der Polymerisationsreaktion zwischen 30 Minuten und 30 Stunden beträgt.

7. Verfahren nach einem der vorhergehenden Ansprüche, dadurch gekennzeichnet, daß die Behandlung bei Normaldruck, unter Druck oder im Vakuum erfolgt.

8. Polysilazan erhältlich durch Anwendung eines Verfahrens gemäß der Definition eines der Ansprüche 1 bis 7.

**Claims**

1. Process for the catalytic treatment of a polysilazane, characterized in that catalytic treatment takes place of at least one polysilazane having on average at least two and preferably at least three ≡SiH groups per molecule, the other organic radicals linked to the silicon or nitrogen atoms being hydrocarbon radicals

free from alkene or alkyne unsaturated, by a catalytically effective quantity of a strong mineral or organic acid catalyst.

2. Process according to claim 1, characterized in that the reaction takes place in the mass.

3. Process according to claim 1, characterized in that the reaction takes place in solution in an organic solvent.

4. Process according to any one of the preceding claims, characterized in that the acid is used at contents between 1 and 10,000 ppm compared with the weight of the starting polysilazane only.

5. Process according to any one of the preceding claims, characterized in that the polymerization temperature is between ambient temperature and 180°C.

6. Process according to any one of the preceding claims, characterized in that the polymerization reaction lasts between 30 minutes and 30 hours.

7. Process according to any one of the preceding claims, characterized in that the treatment takes place under normal pressure, under pressure or under vacuum.

8. Polysilazane obtainable by the performance of a process as defined in any one of the claims 1 to 7.